# EUROPÄISCHE PATENTSCHRIFT

(11) **EP 0 923 466 B1**
(45) Veröffentlichungstag und Bekanntmachung des Hinweises auf die Patenterteilung: **16.01.2002**
(21) Anmeldenummer: 97944800.8
(22) Anmeldetag: 27.08.1997
(51) Int. Cl.: B60R 16/02

(54) **DATENBUS FÜR FAHRZEUGE MIT MEHREREN DER INSASSEN-SICHERHEIT DIENENDEN EINRICHTUNGEN**
DATA BUS FOR VEHICLES WITH SEVERAL PASSENGER SAFETY DEVICES
BUS DE DONNEES POUR VEHICULES COMPORTANT PLUSIEURS SYSTEMES SERVANT A LA SECURITE DES OCCUPANTS

(30) Priorität: 07.09.1996 DE 19636441
(43) Veröffentlichungstag der Anmeldung: 23.06.1999
(73) Patentinhaber: Bayerische Motoren Werke Aktiengesellschaft, 80788 München (DE)
(72) Erfinder: GRIESSBACH, Robert, D-85635 Höhenkirchen-Siegertsbrunn (DE)
(86) Internationale Anmeldenummer: EP9704670
(87) Internationale Veröffentlichungsnummer: WO9809843

(56) Entgegenhaltungen:
- WO-A-85/03826
- WO-A-89/09146
- WO-A-96/08097
- DE-A- 3 534 216

## Beschreibung

Die Erfindung bezieht sich auf einen Datenbus für Fahrzeuge mit mehreren der Insassen-Sicherheit dienenden Einrichtungen, die Teilnehmer eines Datenbusses bilden (vgl. WO-A-89/09146), gemäß dem Oberbegriff des Anspruchs 1.

Bei diesen Einrichtungen handelt es sich um Aktuatoren wie Airbags und Gurtstraffer oder aber auch um Sensoren, die Informationen über Zustände bzw. Meßwerte liefern. Ein derartiger Datenbus unterscheidet sich in seiner Bedeutung und Funktionalität wesentlich von Datenbussen, wie sie bei Fahrzeugen an sich üblich und bekannt sind. Bekannte Datenbusse dienen dazu, den Datenaustausch aller Teilnehmer untereinander zu ermöglichen. Die Teilnehmer sind Teilsystemen des Fahrzeugs zugeordnet und unter den Stichworten digitale Motorelektronik, elektronisch hydraulische Getriebesteuerung und Anti-Blockiersystem bekannt. Derartige Teilsysteme arbeiten nur dann zufriedenstellend, wenn der Datenaustausch sämtlicher Teilnehmer untereinander ermöglicht ist.

Im Gegensatz dazu ist bei einem Datenbus für sicherheitsrelevante Einrichtungen nicht der Datenaustausch sämtlicher Teilnehmer untereinander das primäre Ziel, sondern die Möglichkeit, auf eine kritische Situation möglichst schnell reagieren zu können. Unter Reagieren ist beispielsweise das Auslösen eines Airbags beispielsweise im Türbereich zu verstehen. Wollte man bei einem derartigen Datenbus allen Teilnehmern die Möglichkeit verschaffen, miteinander zu kommunizieren, so würde dies zu sicherheitskritischen Situationen mit der Folge führen, daß aufgrund der Laufzeiten der Signale sämtlicher Teilnehmer die Information über einen sicherheitskritischen Zustand nicht zu dem zuständigen Aktuator gelangt.

Aus der WO 96/08097 A ist ein Verfahren zur Datenübertragung zwischen informationsverarbeitenden Stationen bzw. Geräten für die Automatisierungstechnik bekannt, bei dem alle Stationen nach einem konstanten synchronisierten Zeitzyklus arbeiten, der in drei Phasen geteilt ist, die in der Reihenfolge Synchronisierphase, Broadcastphase und Messagephase ablaufen. In der Broadcastphase wird von jeder Station genau ein Datentelegramm zum Senden freigegeben und auch tatsächlich gesendet, während in der Messagephase von jeder Station solange Datentelegramme zum Senden freigegeben und bei Sendeberechtigung abgeschickt werden, bis die Messagephase zu Ende ist.

Es ist Aufgabe der Erfindung, einen Datenbus zu schaffen, der geeignet ist, der Insassen-Sicherheit dienende Einrichtungen datenbusmäßig miteinander zu verbinden und bei dem die Möglichkeit sichergestellt ist, im Bedarfsfall rechtzeitig den zuständigen Aktuator anzusprechen.

Die Erfindung löst diese Aufgabe durch die im Patentanspruch 1 angegebenen Merkmale.

Die Verwendung eines Synchronisationspulses dient dazu, die Erneuerungsrate der Daten festzulegen und unabhängig von der Zahl der Teilnehmer konstant zu halten. Die Wahl der Taktzykluszeit in der angegebenen Weise dient dazu, im Bedarfsfall, d. h. wenn eine sicherheitskritische Situation besteht und ein oder mehrere Aktuatoren auszulösen sind, nur die hierfür wesentlichen Teilnehmer senden zu lassen. Bei diesen Teilnehmern handelt es sich in aller Regel um die Teilnehmer des Datenbus mit höchster Sendepriorität, die nach Ausgabe des Synchronisationspulses auf den Datenbus gehen und die Information über einen sicherheitskritischen Zustand auf dem Datenbus zur Verfügung stellen. Die Teilnehmer, die aus dieser Information eine eigene Reaktion, beispielsweise das Auslösen des Airbags ableiten, können während der Taktzykluszeit ebensowenig selbst aktiv auf den Datenbus gehen wie weitere Teilnehmer, die Daten von geringerer Priorität aussenden.

Die Taktzykluszeit ist demzufolge vorteilhafterweise so bemessen, daß die prioritätshöchsten Teilnehmer auch dann auf den Datenbus während einer Zykluszeit gehen können, wenn sie sämtlich einen kritischen Zustand melden, während in diesen Fällen Teilnehmer geringerer Priorität dann gerade nicht auf den Datenbus gehen können. Solange der sicherheitskritische Zustand anhält und die prioritätshöchsten Teilnehmer ihre Information auf den Datenbus ausgeben, ist es den anderen Teilnehmern praktisch verwehrt, ihre Information auf den Datenbus zu geben.

Bei der erfindungsgemäß betonten Minimierung der Taktzykluszeit kann es vorkommen, daß ein Teilnehmer zu einem Zeitpunkt auf den Datenbus zugreift, zu dem der nächste Synchronisationspuls ausgegeben wird. In diesem Fall ist es vorteilhaft, die Ausgabe des Synchronisationspulses so lange zu verzögern, bis der Teilnehmer seine Sendung beendet hat.

Um gerade in einem derartigen Fall die Taktfrequenz beibehalten zu können, ist der nachfolgende Synchronisationspuls in seiner Ausgabezeit so bemessen, daß er mit dem vorausgehenden vorletzten Synchronisationspuls synchronisiert ist. Bezeichnet man den vorausgehenden vorletzten Synchronisationspuls als ersten Puls und die nachfolgenden als zweiten, dritten usw. Puls, so ist der zeitliche Abstand zwischen dem ersten und dem zweiten Puls größer als die Taktzykluszeit, während der zeitliche Abstand zwischen dem zweiten und dem dritten Puls kleiner als die Taktzykluszeit ist. Sollte bei Ausgabe des dritten Synchronisationspulses wiederum ein Teilnehmer auf dem Datenbus senden, so wird auch der dritte Synchronisationspuls verzögert ausgegeben. Der darauffolgende Synchronisationspuls, d. h. hier der vierte, kompensiert dann die Zeitüberschreitung usw.

Der Datenbus kann in konventioneller Weise drahtgebunden sein. Im Hinblick auf die Störsicherheit, kann es jedoch vorteilhaft sein, den Datenbus auf der Basis von Lichtwellenleitern mit aktiven Sternkopplern zum Verbinden der Teilnehmer mit dem Datenbus auszubilden.

Im Hinblick auf die Belegung und das Ansprechverhalten des Datenbusses kann es vorteilhaft sein, wenn die Teilnehmer nur bei einer sicherheitskritischen Situation senden. Zusätzlich können die Teilnehmer auch in größeren zeitlichen Abständen (einem Mehrfachen der Taktzykluszeit) senden. Auf diese Weise ist sichergestellt, daß bei einer sicherheitsunkritischen Situation die Informationen der Teilnehmer, die bei einem sicherheitskritischen Zustand nicht die höchste Priorität besitzen, auf den Datenbus gelangen.

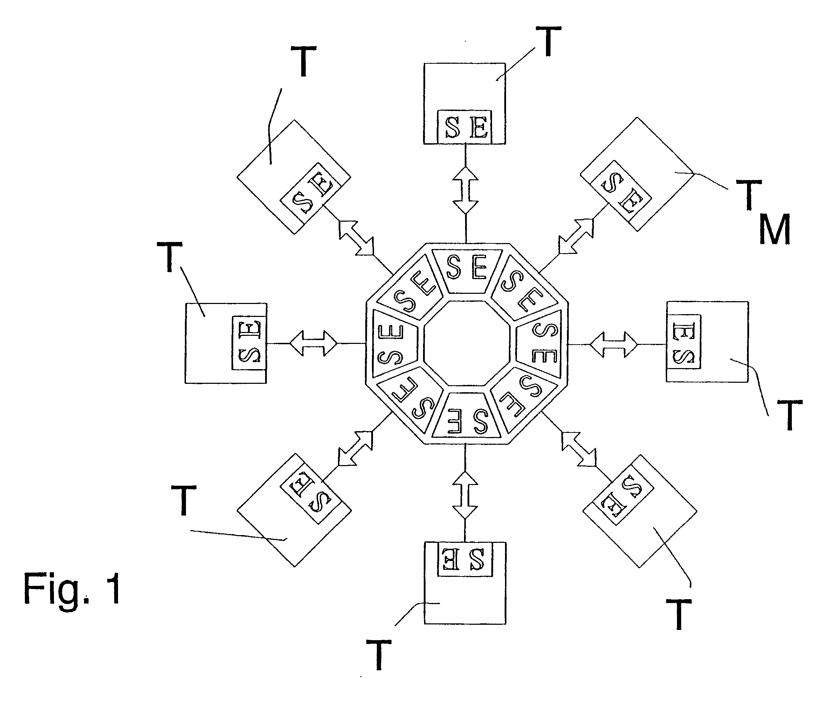

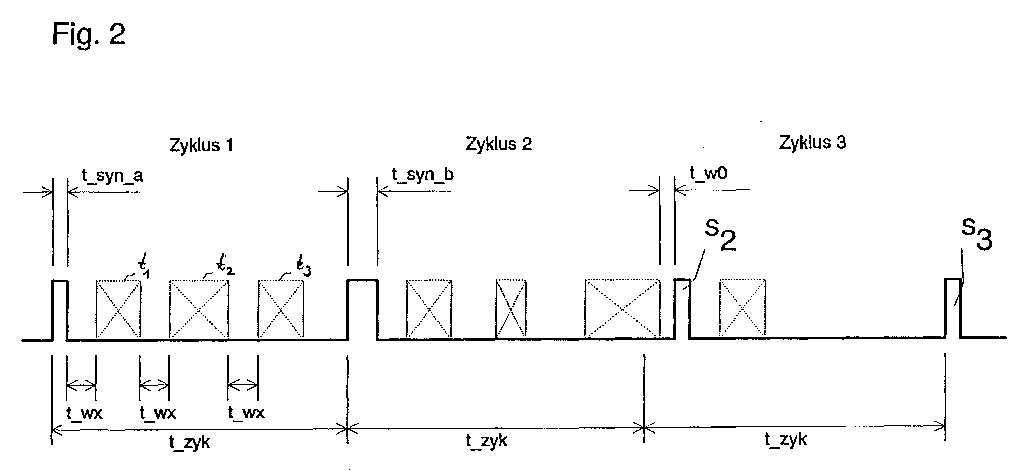

Anhand der Zeichnung ist die Erfindung weiter erläutert. Es zeigt Fig. 1 schematisch einen Datenbus für mehrere Einrichtungen, die der Insassen-Sicherheit dienen und Fig. 2 ein Diagramm zur Erläuterung des Telegrammverkehrs auf dem Datenbus von Fig. 1. Der Datenbus besteht im wesentlichen aus einem einzigen Lichtwellenleiter (i. f. LWL-Faser). Die einzelnen Teilnehmer T sind über die Faser sowie über einen aktiven Sternkoppler miteinander verbunden.

In jedem Teilnehmer ist zur Anschaltung an den LWL-Bus ein Sende/Empfangsbaustein S/E vorhanden, in den eine Sende- und Empfangsdiode sowie eine Strahlteileroptik integriert ist (nicht dargestellt). Die durch die LWL-Faser gebildete LWL-Strecke wird bidirektional betrieben. Der aktive Sternkoppler besteht im wesentlichen aus den S/E-Bausteinen. Für jeden Teilnehmer ist ein S/E-Baustein vorhanden. Die Bausteine sind im Sternkoppler so verschaltet, daß die von einem Teilnehmer gesendete Botschaft auf alle anderen Stränge des Bussystems verteilt wird. Diese Stränge sind im wesentlichen gebildet durch die S/E-Bausteine sowohl des Sternkopplers als auch damit korrespondierend die S/E-Bausteine der jeweiligen Teilnehmer.

Einer der Teilnehmer dient als Busmaster. Hierfür sei der mit T_{M} bezeichnete Teilnehmer vorgesehen. Dieser Teilnehmer sendet in zeitlich regelmäßigen Abständen einen Synchronisationspuls aus, wie im Diagramm von Fig. 2 dargestellt. Mit vorgegebender Sendepriorität erhalten die Teilnehmer die Sendeberechtigung. Befindet sich der jeweilige Teilnehmer in einem sicherheitsunkritischen Zustand, so sendet er in der Regel nicht. In der Regel bedeutet dabei, daß es sich dabei nicht um den Initialisierungsvorgang handelt, bei dem die Teilnehmer nach Inbetriebnahme des Fahrzeugs sich durch Aussenden einer Kennung den anderen Teilnehmern und dem Busmaster zu erkennen geben. Die Teilnehmer melden sich allerdings zyklisch, in relativ langen Abständen immer wieder.

Handelt es sich um einen sicherheitsunkritischen Zustand, d. h. senden die Teilnehmer sämtlich nicht, so wird der nächste Synchronisationspuls nach Ablauf der Taktzykluszeit durch den Busmaster ausgegeben.

Bei einem sicherheitskritischen Zustand, bei dem beispielsweise der Busteilnehmer mit höchster Sendepriorität aktiviert ist, wird der Datenbus zunächst durch dessen Telegramm t₁ belegt. Der Teilnehmer mit der nächstfolgenden Sendepriorität sendet beispielsweise dann ebenfalls und gibt das Telegramm t₂ aus. Entsprechendes geschieht für den Teilnehmer mit dem Telegramm t₃. Jedes Telegramm tᵢ besitzt, wie an sich aus der DE 3534216 A bekannt, eine Kennung, aufgrund derer die anderen Teilnehmer das Telegramm identifizieren und ggf. aufnehmen können. Es ist auch möglich, Telegramme auf den Datenbus auszugeben, die die Adresse eines Empfängers enthalten und nur für diesen bestimmt sind. Nach Ablauf der Taktzykluszeit und wenn zu diesem Zeitpunkt kein Teilnehmer sendet, wird der nächste Synchronisationspuls s ausgegeben.

Sendet hingegen ein Teilnehmer bei Ablauf der Taktzykluszeit, so wird die Ausgabe des Synchronisationspulses verzögert. Dieser Fall ist in dem mit Zyklus 2 bezeichneten Zeitraum dargestellt. Die Verzögerung muß dabei kleiner als der zeitliche Abstand sein, der zwischen den Sendungen aufeinanderfolgender Teilnehmer besteht.

Der anschließende Synchronisationspuls ist mit dem ersten, zu Beginn des Zyklus 1 ausgegebenen Synchronisationspulses synchronisiert. Der zeitliche Abstand zwischen dem Synchronisationspuls s₂ und und s₃ ist kleiner als die Taktzykluszeit.

Auf diese Weise wird erstmalig die Möglichkeit eröffnet, für die Insassen-Sicherheit der Fahrzeugbenutzer zuständige Einrichtungen über einen Datenbus kommunizieren zu lassen.

## Patentansprüche

1. Datenbus für Fahrzeuge mit mehreren der Insassen-Sicherheit dienenden Einrichtungen, die Teilnehmer (T) des Datenbusses sind, wobei die Teilnehmer (T) des Datenbus durch einen Synchronisationspuls synchronisiert sind,
**gekennzeichnet durch** folgende Merkmale:
a) die Taktzykluszeit (t_zyk) des Synchronisationspulses ist kleiner als die kumulierte Sendezeit der Teilnehmer (T) und
b) die Taktzykluszeit (t_zyk) ist gleich der kumulierten Sendezeiten einer bestimmten Anzahl der prioritätshöchsten Teilnehmer.

2. Datenbus nach Anspruch 1,
**dadurch gekennzeichnet,**
**daß** der Sendezeitpunkt des Synchronisationspulses dann bis zum Ende dieser Sendung verschoben ist, wenn bei Ablauf der Taktzykluszeit ein Teilnehmer (T) sendet.

3. Datenbus nach Anspruch 2,
**dadurch gekennzeichnet,**
**daß** der nachfolgende Synchronisationspuls mit dem vorletzten vorausgehenden Synchronisationspuls synchronisiert ist.

4. Datenbus nach einem der Ansprüche 1 bis 3,
**dadurch gekennzeichnet,**
**daß** die Teilnehmer (T) über einen aktiven Sternkoppler miteinander verbunden sind.

5. Datenbus nach einem der Ansprüche 1 bis 4,
**dadurch gekennzeichnet,**
**daß** die Teilnehmer (T) nur bei einer sicherheitskritischen Situation senden.

## Claims

1. A data bus for vehicles comprising a number of passenger safety devices which are users (T) of the data bus, wherein the users (T) of the data bus are synchronised by a synchronisation pulse,
**characterised in that**
(a) the basic cycle time (t_zyk) of the synchronisation pulse is less than the cumulative transmission time of the users (T) and
(b) the basic cycle time (t_zyk) is equal to the cumulative transmission time of a particular number of highest-priority users.

2. A data bus according to claim 1, **characterised in that** the time of transmission of the synchronisation pulse is postponed until the end of the transmission, if a user (T) is transmitting at the end of the basic cycle time.

3. A data bus according to claim 2, **characterised in that** the next synchronisation pulse is synchronised with the penultimate preceding synchronisation pulse.

4. A data bus according to any of claims 1 to 3, **characterised in that** the users (T) are interconnected by an active star coupler.

5. A data bus according to any of claims 1 to 4, **characterised in that** the users (T) transmit only in a critical safety situation.

## Revendications

1. Bus de données pour véhicules comportant plusieurs systèmes servant à la sécurité des passagers et qui sont des participants (T) du bus, synchronisés par une impulsion de synchronisation,
**caractérisé en ce que**
a) la durée du cycle cadencé (t-zyk) de l'impulsion de synchronisation est inférieure au temps cumulé d'émission des participants (T), et
b) la durée du cycle (t-zyk) est égale au temps cumulé d'émission d'un nombre défini de participants bénéficiant des priorités les plus élevées.

2. Bus de données selon la revendication 1,
**caractérisé en ce que**
l'instant où commence l'émission de l'impulsion de synchronisation est reculé jusqu'à la fin de cette émission, si un participant (T) émet quand s'achève la durée du cycle cadencé.

3. Bus de données selon la revendication 2,
**caractérisé en ce que**
l'impulsion suivante de synchronisation est synchronisée avec l'avant-dernière impulsion précédente.

4. Bus de données selon l'une quelconque des revendications 1 à 3,
**caractérisé en ce que**
les participants (T) sont reliés entre eux par un coupleur actif en étoile.

5. Bus de données selon l'une quelconque des revendications 1 à 4,
**caractérisé en ce que**
les participants (T) n'émettent que dans une situation critique pour la sécurité.
